# FASCICULE DE BREVET EUROPEEN

(11) **EP 3 011 157 B1**
(45) Date de publication et mention de la délivrance du brevet: **02.10.2019**
(21) Numéro de dépôt: 14738558.7
(22) Date de dépôt: 17.06.2014
(51) Int. Cl.: F02C 7/32, F04D 25/02, F02C 7/36, F16H 57/02

(54) **BOITIER D'ACCESSOIRES DE TURBOMACHINE EQUIPE D'UNE POMPE CENTRIFUGE**
TURBOMASCHINENHILFSANTRIEB MIT EINER KREISELPUMPE
TURBOMACHINE ACCESSORY GEARBOX EQUIPPED WITH A CENTRIFUGAL PUMP

(30) Priorité: 21.06.2013 FR 1355940
(43) Date de publication de la demande: 27.04.2016
(73) Titulaire: Safran Transmission Systems, 92700 Colombes (FR)
(72) Inventeur: PRUNERA-USACH, Stéphane, 14197 Berlin (DE); MORELLI, Boris, F-75014 Paris (FR); THIBERGE, Samuel, F-14760 Bretteville-sur-Odon (FR)
(74) Mandataire: Gevers & Orès
(86) Numéro de dépôt international: PCT/FR2014/051502
(87) Numéro de publication internationale: WO 2014/202898

(56) Documents cités:
- WO-A1-2005/073540
- WO-A1-2007/096493
- FR-A1- 2 556 413
- FR-A1- 2 976 976
- GB-A- 1 034 233
- GB-A- 1 250 040

## Description

### DOMAINE TECHNIQUE

La présente invention concerne un boîtier d'accessoires pour une turbomachine, ce boîtier d'accessoires aussi appelé AGB (acronyme de *Accessory Gear Box*) étant doté d'un équipement et en particulier d'une pompe telle qu'une pompe centrifuge.

### ETAT DE L'ART

La recherche continue de la performance d'un moteur aéronautique pousse à intégrer le boîtier d'accessoires dans un environnement de plus en plus contraint. L'encombrement global d'un boîtier d'accessoires participe à la performance globale du moteur. Il devient donc nécessaire de réduire l'encombrement du boîtier d'accessoires et de ses équipements.

Un boîtier d'accessoires pour une turbomachine est destiné à transmettre une puissance mécanique originaire de la turbomachine à des équipements tels qu'une pompe, un séparateur air/huile, un générateur d'électricité, etc. Le boîtier d'accessoires comporte des pignons engrenés les uns avec les autres et dont au moins certains sont solidaires de queues coaxiales destinées à entraîner en rotation des parties mobiles ou rotors des équipements.

Dans la technique actuelle, la queue précitée de chaque pignon du boîtier traverse un orifice du carter du boîtier d'accessoires et est reliée à l'extérieur du boîtier à un arbre de la partie tournante de l'équipement.

Dans le cas où l'équipement est une pompe centrifuge, par exemple à carburant, cette pompe comporte un rouet qui est solidaire en rotation d'un arbre qui est destiné à être entraîné en rotation par la queue du pignon. L'arbre est guidé en rotation par des paliers montés dans la pompe centrifuge. Cette pompe centrifuge est du type à volute, cette volute faisant partie de la partie fixe ou stator de la pompe et permettant la génération de la pression nécessaire au bon fonctionnement de la pompe. L'ensemble partie fixe/partie mobile de la pompe est connecté au boîtier d'accessoires via la queue du pignon puis est fixé au carter de ce boîtier.

Cependant, cette technologie n'est pas satisfaisante car le boîtier et l'équipement sont trop encombrants, ce qui rend difficile leur intégration dans la turbomachine.

L'invention permet d'apporter une solution simple, efficace et économique à ce problème

### EXPOSE DE L'INVENTION

L'invention propose un boîtier d'accessoires pour une turbomachine selon les caractéristiques de la revendication 1, ce boîtier étant doté d'une pompe centrifuge et comportant des pignons engrenés les uns avec les autres et dont un est formé d'une seule pièce avec une queue coaxiale d'entraînement d'un rouet de la pompe centrifuge, caractérisé en ce que ce rouet est directement monté sur la queue précitée.

Selon l'invention, une partie de la pompe est intégrée dans le boîtier d'accessoires, et en particulier dans le volume défini par le carter du boîtier d'accessoires. Cela est rendu possible par le fait que la partie tournante de la pompe est directement montée sur la queue d'un pignon du boîtier d'accessoires. Autrement dit, par opposition à la technique antérieure dans laquelle la partie tournante était portée par un arbre destiné à être entraîné par la queue d'un pignon du boîtier, la partie tournante est ici directement portée par la queue du pignon. Ceci permet de supprimer l'arbre de la pompe de la technique antérieure ainsi que ses paliers de guidage, et se traduit par un gain de masse et une réduction significative de l'encombrement axial du boîtier et de la pompe (l'axe considéré étant ici l'axe de rotation de la queue de pignon et de la partie tournante de la pompe). Par ailleurs, la partie tournante de la pompe peut être guidée en rotation par les paliers de guidage de la queue du pignon, ce qui permet d'améliorer la fiabilité de l'ensemble.

Dans un mode préféré de réalisation de l'invention, le rouet est directement monté sur une extrémité de la queue précitée.

Le rouet peut être monté entre un premier et un deuxième carter de la pompe centrifuge, qui sont fixés sur un carter du boîtier.

La queue est de préférence guidée en rotation par un palier porté par le premier carter. Le premier carter peut être en forme de disque. Il peut comprendre un orifice central de passage de la queue. Le premier carter peut comprendre à sa périphérie interne un rebord cylindrique de montage du palier de guidage de la queue.

Le deuxième carter peut comprendre à sa périphérie externe une bride de fixation par exemple à une bride de fixation du premier carter ou du carter du boîtier.

La pompe centrifuge peut comprendre une volute définie par le deuxième carter ou le carter du boîtier.

Le premier carter peut définir avec le rouet un espace annulaire de logement de moyens d'étanchéité, par exemple dynamique.

La présente invention concerne également une turbomachine, telle qu'un turboréacteur, un turbopropulseur ou un turbomoteur d'avion ou d'hélicoptère, caractérisée en ce qu'elle comprend un boîtier tel que décrit ci-dessus.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 est une vue très schématique d'un boîtier d'accessoires de turbomachine, sur lequel sont montés deux équipements ;
- la figure 2 est une vue très schématique partielle en coupe axiale d'un boîtier d'accessoires équipé d'une pompe centrifuge, et représente la technique antérieure à l'invention ;
- la figure 3 est une vue très schématique partielle en coupe axiale d'un boîtier d'accessoires équipé d'une pompe centrifuge, et représente l'invention ; et
- les figures 4 et 5 sont des vues schématiques partielles en coupe axiale et en perspective d'un boîtier d'accessoires et d'une pompe centrifuge selon l'invention.

### DESCRIPTION DETAILLEE

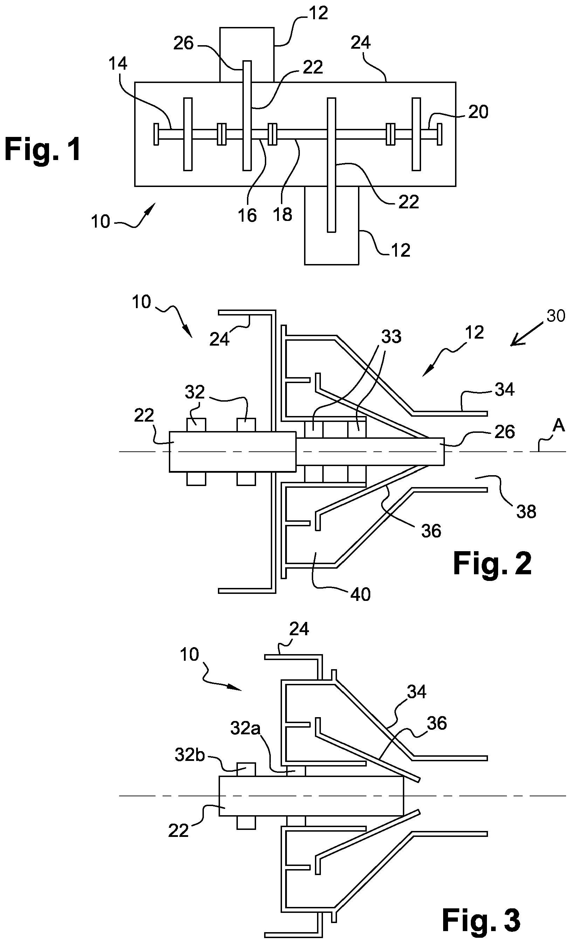

On se réfère d'abord à la figure 1 qui représente de manière très schématique un boîtier d'accessoires 10 pour une turbomachine, telle qu'un turboréacteur, un turbopropulseur ou un turbomoteur d'avion ou d'hélicoptère, ce boîtier 10 étant équipé d'accessoires ou d'équipements 12 qui sont au nombre de deux dans l'exemple représenté.

Le boîtier d'accessoires 10 est destiné à transmettre une puissance mécanique originaire de la turbomachine par l'intermédiaire d'un arbre radial sortant de celle-ci, et à le transmettre aux équipements qui sont des pompes, des séparateurs air/huile, des générateurs d'électricité, etc. La transmission s'effectue par une chaîne cinématique composée de pignons 14, 16, 18, 20 successifs, qui sont au nombre de quatre dans l'exemple représenté.

Les pignons 16 et 20 comportent chacun une queue 22 coaxiale, qui est formée d'une seule pièce avec le pignon correspondant, et qui traverse un orifice du carter 24 du boîtier d'accessoires. La partie d'extrémité de la queue 22 d'un pignon, située à l'extérieur du boîtier 10, est mise en prise avec un arbre 26 de la partie tournante de l'équipement 12 correspondant, pour la mise en rotation de cette partie tournante.

La figure 2 est une vue très schématique à plus grande échelle de la zone de liaison d'une queue 22 de pignon à un arbre de rotor 26 d'un équipement 12, qui est ici une pompe centrifuge 30 et à volute.

La queue 22 du pignon est centrée et guidée en rotation par des paliers 32 qui sont montés dans le carter 24 du boîtier d'accessoires 10. L'arbre 26 de l'équipement 12 est relié par une extrémité à la partie de la queue 22 située à l'extérieur du carter 24, et est centré et guidé en rotation par des paliers 33 montés dans une partie fixe, telle qu'un carter 34, de la pompe (équipement 12).

La pompe centrifuge comprend un rouet 36 qui est porté par l'arbre 26 et est solidaire en rotation de cet arbre. Le carter 34 de la pompe définit une entrée 38 de fluide en amont du rouet 26 ainsi qu'une volute 40 et une sortie de fluide en aval du rouet, c'est-à-dire à sa périphérie externe.

La technologie représentée en figure 2, qui représente la technique antérieure, a l'inconvénient d'être encombrante axialement (axe A). L'invention, schématiquement représentée en figure 3, permet de remédier à ce problème grâce à l'intégration d'une partie de l'équipement 12, à savoir la pompe centrifuge dans l'exemple précité, dans le carter 24 du boîtier d'accessoires.

Ceci est rendu possible par le montage direct de la partie tournante de l'équipement sur la queue du pignon. En figure 3, le rouet 36 de la pompe est en effet fixé à une extrémité de la queue 22. Une partie du carter de la pompe est logée à l'intérieur du carter 24 du boîtier d'accessoires 10 et sert en outre de support à un premier palier 32a de guidage de la queue 22, un autre palier 32b de guidage de la queue étant porté par le carter 24 du boîtier d'accessoires 10.

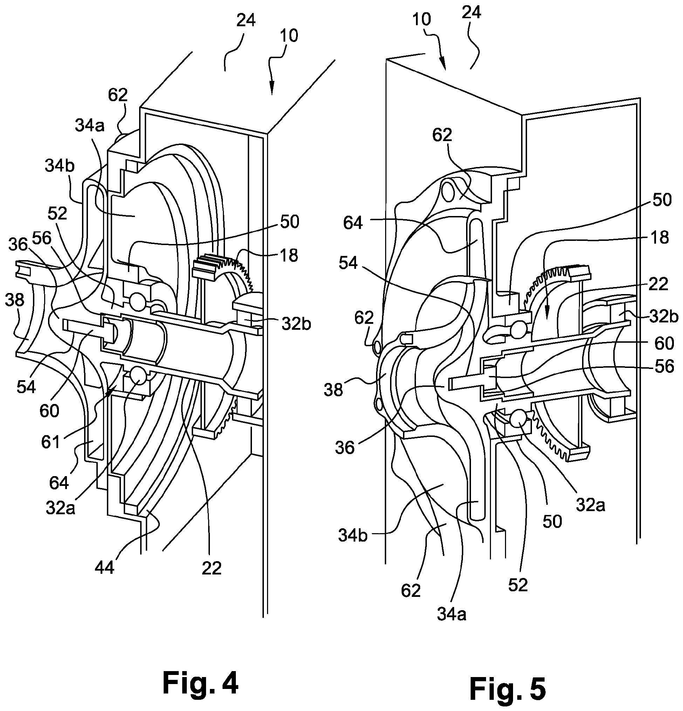

On se réfère maintenant aux figures 4 et 5 qui représentent un exemple plus concret de réalisation de l'invention, et dans lesquelles les éléments déjà décrits dans ce qui précède sont désignés par les mêmes références.

Le carter 24 du boîtier d'accessoires 10 comporte une ouverture 44 à contour circulaire qui est traversée axialement par la queue 22 du pignon 18. Comme cela est visible dans les dessins, le pignon 18 et la queue 22 sont formés d'une seule pièce, la queue ayant ici une forme générale cylindrique tubulaire. La queue 22 est guidée en rotation par les paliers 32a, 32b, le palier 32b étant porté par le carter 24 et le palier 32a étant porté par un premier carter 34a de la pompe.

Ce premier carter 34a est en forme de disque et est destiné à être appliqué et serré contre le carter 24 du boîtier 10, pour obturer l'ouverture 44 précitée. Ce premier carter 34a comprend un alésage central de passage de la queue 22 et comprend à sa périphérie interne un rebord cylindrique 50 s'étendant à l'intérieur du boîtier 10 et à l'intérieur duquel est fixée la cage externe du palier 32a qui est ici du type à billes. La cage interne du palier 32a est fixée sur la queue 22.

De façon classique, le rouet 36 de la pompe comprend un moyeu central entouré par une paroi annulaire et reliée à cette paroi par des aubes, le moyeu et la paroi définissant entre elles une veine centrifuge à entrée axiale et à sortie radiale.

Le rouet 36 de la pompe est formé d'une seule pièce avec un rebord 52 à opposition de forme de montage sur l'extrémité de la queue 22. Dans l'exemple représenté, le rebord 52 est relié au moyeu du rouet 36 et s'étend axialement du côté opposé à l'entrée de la veine centrifuge. Le rebord 52 a un diamètre interne légèrement supérieur au diamètre externe de cette extrémité de la queue. En position de montage, le rebord 52 traverse axialement l'ouverture du premier carter 32a et l'ouverture 44 du carter 24 du boîtier d'accessoires 10.

L'extrémité de la queue 22 du pignon, qui traverse l'ouverture 44 du carter 24, comprend un rebord annulaire 56 radialement interne dont la périphérie interne définit un orifice de passage d'une vis 60 de fixation du rouet 36 à la queue. Le moyeu du rouet 36 comporte un trou axial 54 taraudé qui, en position de montage, est aligné avec l'orifice de celle-ci. La vis 60 est engagée à l'intérieur de la queue puis est vissée dans le trou 54 du rouet 36 à travers l'orifice de l'extrémité de la queue 22. Ce vissage assure la retenue axiale du rouet 36 sur la queue 22. Cet assemblage entre le rouet 36 et la queue 22 doit être complété par l'intermédiaire d'une liaison par opposition de formes (type P3G ou similaire), bloquant en rotation les pièces l'une par rapport à l'autre.

La périphérie externe du rouet 36 définit avec le premier carter 34a un espace annulaire 61 dans lequel peuvent être logés des moyens d'étanchéité dynamique du type joint à contact carbone ou joint à décollement par exemple. Dans le cadre d'une pompe carburant, une double étanchéité dynamique avec un drain intermédiaire peut-être utilisée afin d'éviter un mélange huile/carburant.

Un deuxième carter 34b est rapporté et fixé sur le premier carter 34a et définit avec ce premier carter une chambre de logement et de rotation du rouet 36. Ce deuxième carter 34b comprend à sa périphérie externe une bride 62 de fixation par des moyens du type vis-écrou sur une bride annulaire (non visible) correspondante du carter du boîtier 10, la périphérie externe du premier carter 34a étant intercalée entre ces brides et destinée à être serrée entre ces brides au serrage des vis. En variante, le carter 34b peut être fixé directement sur le carter 34a.

Le deuxième carter 34b définit une entrée tubulaire 38 sensiblement cylindrique d'alimentation en fluide de la pompe, et un espace périphérique annulaire 64 de sortie de fluide de la pompe, cet espace comportant une volute (non visible).

## Revendications

1. Boîtier d'accessoires (10) pour une turbomachine, ce boîtier étant doté d'une pompe centrifuge (12) et comportant des pignons (14-20) engrenés les uns avec les autres et dont un est formé d'une seule pièce avec une queue (22) coaxiale d'entraînement d'un rouet (36) de la pompe centrifuge (12), **caractérisé en ce que** ledit rouet est directement monté sur la queue précitée.

2. Boîtier d'accessoires (10) selon la revendication 1, **caractérisé en ce que** ledit rouet (36) est directement monté sur une extrémité de la queue (22) précitée.

3. Boîtier d'accessoires (10) selon la revendication 2, **caractérisé en ce que** le rouet (36) est monté entre un premier et un deuxième carter (34a, 34b) de la pompe centrifuge, qui sont fixés sur un carter (24) du boîtier d'accessoires.

4. Boîtier d'accessoires (10) selon la revendication 3, **caractérisé en ce que** la queue (22) est guidée en rotation par un palier (32a) porté par le premier carter (34a).

5. Boîtier d'accessoires (10) selon la revendication 3 ou 4, **caractérisé en ce que** le premier carter (34a) comprend un orifice central de passage de la queue (22).

6. Boîtier d'accessoires (10) selon l'ensemble des revendications 4 et 5, **caractérisé en ce que** le premier carter (34a) comprend à sa périphérie interne un rebord cylindrique (50) de montage du palier (32a) de guidage de la queue (22).

7. Boîtier d'accessoires (10) selon l'une des revendications 3 à 6, **caractérisé en ce que** le deuxième carter (34b) comprend à sa périphérie externe une bride (62) de fixation.

8. Boîtier d'accessoires (10) selon l'une des revendications 3 à 7, **caractérisé en ce que** la pompe centrifuge comprend une volute définie par le deuxième carter (34b) de la pompe centrifuge ou le carter (24) du boîtier d'accessoires.

9. Boîtier d'accessoires (10) selon l'une des revendications 3 à 8, **caractérisé en ce que** le premier carter (34a) définit avec le rouet (36) un espace annulaire de logement de moyens d'étanchéité.

10. Turbomachine, telle qu'un turboréacteur, un turbopropulseur ou un turbomoteur d'avion ou d'hélicoptère, **caractérisée en ce qu'**elle comprend un boîtier d'accessoires (10) selon l'une des revendications précédentes.

## Patentansprüche

1. Hilfsantrieb (10) für eine Turbomaschine, wobei dieser Antrieb mit einer Kreiselpumpe (12) versehen ist und Ritzel (14-20) beinhaltet, die ineinander eingreifen, und von denen eines aus einem einzigen Stück mit einem koaxialen Schaft (22) zum Antreiben eines Laufrads (36) der Kreiselpumpe (12) gebildet ist, **dadurch gekennzeichnet, dass** das Laufrad direkt auf dem zuvor genannten Schaft montiert ist.

2. Hilfsantrieb (10) nach Anspruch 1, **dadurch gekennzeichnet, dass** das Laufrad (36) direkt auf ein Ende des oben genannten Schafts (22) montiert ist.

3. Hilfsantrieb (10) nach Anspruch 2, **dadurch gekennzeichnet, dass** das Laufrad (36) zwischen einem ersten und einem zweiten Gehäuse (34a, 34b) der Kreiselpumpe montiert ist, die auf einem Gehäuse (24) des Hilfsantriebs befestigt sind.

4. Hilfsantrieb (10) nach Anspruch 3, **dadurch gekennzeichnet, dass** der Schaft (22) von einem Lager (32a) in Drehung geführt ist, das von dem ersten Gehäuse (34a) getragen wird.

5. Hilfsantrieb (10) nach Anspruch 3 oder 4, **dadurch gekennzeichnet, dass** das erste Gehäuse (34a) eine zentrale Durchgangsöffnung des Schafts (22) umfasst.

6. Hilfsantrieb (10) nach den Ansprüchen 4 und 5, **dadurch gekennzeichnet, dass** das erste Gehäuse (34a) an seinem inneren Umfang einen zylindrischen Rand (50) zur Montage des Führungslagers (32a) des Schafts (22) umfasst.

7. Hilfsantrieb (10) nach einem der Ansprüche 3 bis 6, **dadurch gekennzeichnet, dass** das zweite Gehäuse (34b) an seinem äußeren Umfang einen Befestigungsflansch (62) umfasst.

8. Hilfsantrieb (10) nach einem der Ansprüche 3 bis 7, **dadurch gekennzeichnet, dass** die Kreiselpumpe eine Schnecke umfasst, die durch das zweite Gehäuse (34b) der Kreiselpumpe oder dem Gehäuse (24) des Hilfsantriebs definiert ist.

9. Hilfsantrieb (10) nach einem der Ansprüche 3 bis 8, **dadurch gekennzeichnet, dass** das erste Gehäuse (34a) mit dem Laufrad (36) einen Ringraum zur Aufnahme von Abdichtmitteln definiert.

10. Turbomaschine, wie ein Turboluftstrahltriebwerk, ein Turbopropellertriebwerk oder ein Turbomotor eines Flugzeugs oder Hubschraubers, **dadurch gekennzeichnet, dass** sie einen Hilfsantrieb (10) nach einem der vorstehenden Ansprüche umfasst.

## Claims

1. Accessory gearbox (10) for a turbine engine, this gearbox being provided with a centrifugal pump (12) and comprising intermeshing pinions (14-20), one of which is formed integrally with a coaxial shank (22) for driving a wheel (36) of the centrifugal pump (12), **characterised in that** said wheel is directly mounted on the aforementioned shank.

2. Accessory gearbox (10) according to claim 1, **characterised in that** said wheel (36) is directly mounted on one end of the aforementioned shank (22).

3. Accessory gearbox (10) according to claim 2, **characterised in that** the wheel (36) is mounted between a first and a second casing (34a, 34b) of the centrifugal pump, which are fixed to a casing (24) of the accessory gearbox.

4. Accessory gearbox (10) according to claim 3, **characterised in that** the shank (22) is rotationally guided by a bearing (32a) carried by the first casing (34a).

5. Accessory gearbox (10) according to either claim 3 or claim 4, **characterised in that** the first casing (34a) comprises a central orifice for the shank (22) to pass through.

6. Accessory gearbox (10) according to claim 4 and claim 5 together, **characterised in that** the first casing (34a) comprises at its internal periphery a cylindrical rim (50) for mounting the bearing (32a) for guiding the shank (22).

7. Accessory gearbox (10) according to any of claims 3 to 6, **characterised in that** the second casing (34b) comprises a fixing flange (62) at its external periphery thereof.

8. Accessory gearbox (10) according to any of claims 3 to 7, **characterised in that** the centrifugal pump comprises a volute defined by the second casing (34b) of the centrifugal pump or the casing (24) of the accessory gearbox.

9. Accessory gearbox (10) according to any of claims 3 to 8, **characterised in that** the first casing (34a) defines with the wheel (36) an annular space for housing sealing means.

10. Turbine engine, such as a turbojet engine, a turboprop engine or a turboshaft engine for an aeroplane or helicopter, **characterised in that** it comprises an accessory gearbox (10) according to any of the preceding claims.
